# EUROPEAN PATENT APPLICATION

(11) **EP 4 718 042 A1**
(43) Date of publication of application: **01.04.2026**
(21) Application number: 24203355.3
(22) Date of filing: 27.09.2024
(51) Int. Cl.: G01H 9/00, G01D 5/353, H04B 10/071

(54) **DISTRIBUTED ACOUSTIC SENSING METHOD**

(71) Applicant: British Telecommunications public limited company, London E1 8EE (GB)
(72) Inventor: PARKIN, Neil, London E1 8EE (GB); WRIGHT, Paul, London E1 8EE (GB); POWER, Rose, London E1 8EE (GB)
(74) Representative: British Telecommunications public limited company Intellectual Property Department

(57) **Abstract**

There is herein described, a method of Distributed Acoustic Sensing, the method comprising transmitting an optical sensing signal into an optical fibre located in a channel, measuring an intensity of a return signal, the return signal comprising a component of the optical sensing signal that has been backscattered from a target location in the optical fibre, performing a comparison of the measured intensity of the return signal to a threshold, if the comparison indicates that the intensity of the return signal is greater than the threshold, determining that a blockage may be present in the channel in the vicinity of the target location.

## Description

Optical fibres in telecomms networks are arranged in fibre cables and the fibre cables laid in underground plastic ducts. A problem is that silty water can enter the duct, either through the open ends of the duct or through ruptures caused by environmental factors. Over time, a hard deposit of sediment builds up around the cables, forming a blockage in the duct. The blockage makes it difficult for technicians to remove cables from the duct and insert replacements.

It would be desirable to provide a method in which some and/or all of the above-mentioned and/or other disadvantages of the prior art are overcome or substantially mitigated.

According to a first aspect of the invention there is provided a method of Distributed Acoustic Sensing, the method comprising:
Transmitting an optical sensing signal into an optical fibre located in a channel;
Measuring an intensity of a return signal, the return signal comprising a component of the optical sensing signal that has been backscattered from a target location in the optical fibre;
Performing a comparison of the measured intensity of the return signal to a threshold;
If the comparison indicates that the intensity of the return signal is greater than the threshold, determining that a blockage may be present in the channel in the vicinity of the target location.

The method of Distributed Acoustic Sensing (DAS) may be a method of phase coherent Optical Time Delay Reflectometry. The step of measuring an intensity of a return signal may comprise measuring the intensity of the return signal during a period corresponding to the arrival time of a signal backscattered from a location in the fibre.

The channel may be a duct. The optical fibre may be located in a cable within the duct. The duct may be located underground. The optical fibre may be part of a telecomms network. The blockage may comprise silt that has leaked into the duct through a rupture in the duct or through an open end of the duct.

The steps of transmitting an optical sensing signal into an optical fibre located in a channel and measuring an intensity of a return signal performed at optical pulse source which may be a DAS unit. The optical pulse source may be located at a proximal end of the optical fibre. The component of the optical sensing signal may be backscattered from particles in the optical fibre that are experiencing acoustic vibrations. The acoustic vibrations may be caused by traffic and/or roadworks and/or a water leak.

The method may comprise iteratively performing the steps:
measuring an intensity of a return signal, the return signal comprising a component of the optical sensing signal that has been backscattered from a target location of the optical fibre,
performing a comparison of the measured intensity of the return signal to a threshold; and
if the comparison indicates that the intensity of the return signal is greater than the threshold, determining that a blockage may be present in the channel at the target location
at a series of further target locations in the fibre, the further target locations being spaced apart by an increment. The increment may be less than 10m and may be less than 5m and may be 1m and may be less than 1m and may be 0.5m.

The method may further comprise transmitting a resolution signal into the optical fibre and measuring an intensity of a return resolution signal during:
(i) a first time window corresponding to the arrival time of a signal backscattered from a location in the fibre located a resolution distance from the target location in the direction of a source of the resolution signal;
(ii) a second time window corresponding to the arrival time of a signal backscattered from a location in the fibre located a resolution distance from the target location in an opposite direction to the source of the resolution signal.

The resolution signal may be transmitted by the DAS unit. The resolution distance may be greater than 0.5m and less than 1.5m and may be 1m.

The method may further comprise comparing the intensity of the signal to the measured intensity during the first time window and to the measured intensity during the second time window. If the intensity of the signal is greater than the measured intensity during the first time window and the measured intensity during the second time window, the method may comprise determining that a blockage has been located and recording its location as the target location.

The method may further comprise transmitting a verification optical signal into a second optical fibre located in same duct as the optical fibre. The second optical fibre may be located in a second cable that is different to the cable carrying the first optical fibre. The method may further comprise measuring an intensity of a return verification signal during a verification window corresponding to the arrival time of a signal backscattered from a verification location in the second optical fibre. The verification location may be within an axial distance of less than 0.5m, and is preferably less than 0.1m from the target location. The method may further comprise transmitting a verification optical signal into a plurality of further optical fibres located in same duct as the optical fibre.

The method may further comprise performing a comparison of the measured intensity of the return verification signal to a threshold and if the comparison indicates that the intensity of the return verification signal is greater than the threshold, determining that the presence of the blockage has been verified. The method may further comprise transmitting a notification indicating the presence of a blockage at the target location.

A specific embodiment of the invention will now be described in detail, for illustration only, with reference to the appended drawings, in which:
Fig 1 is a schematic representation of apparatus for use with the invention;
Fig 2 is a flow chart showing the main steps of the method according to the invention.

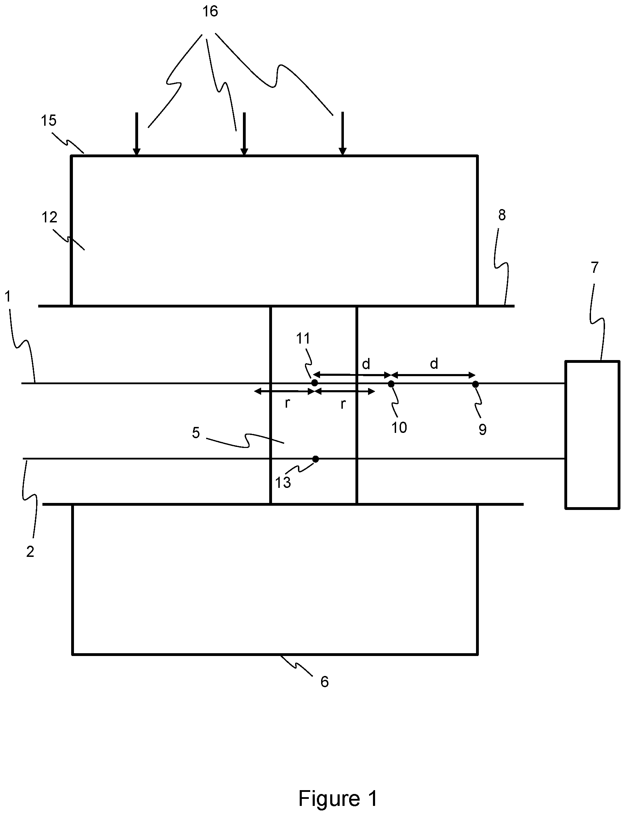

Fig 1 is a schematic view of a subterranean cable duct 8 that has been laid under a road 15. The relative sizes of some of the features depicted have been exaggerated in order that the invention be more clearly understood.

The duct 8 lies on a substrate 6 and beneath the road 15. The duct 8 carries optical fibre 1 and optical fibre 2. Optical fibre 1 is connected at a proximal end to a DAS unit 7. The duct 8 also carries a second optical fibre 2 which is also connected at a proximal end to the DAS unit 7. The DAS unit 7 is adapted to perform phase coherent optical time domain reflectometry (OTDR). The first and second optical fibres are carried in respective cables which are omitted for clarity in Figure 1. The duct 8 contains a rupture (not shown). Over time silty water has entered the duct 8 through the rupture and has hardened to form a blockage 5. This solid blockage 5 makes it difficult for technicians to remove fibre cables that are no longer required or insert new ones.

The present invention uses OTDR to determine the location of the blockage in the duct. The three arrows labelled 16 in Figure 1 represent acoustic vibrations that occur on the road 15 caused by traffic. The acoustic vibrations from the traffic pass through stratum 12 and reach the duct 8. The acoustic vibrations are transmitted more effectively through the solid blockage 5 than they are through the air in the duct 8. Therefore the acoustic vibrations are transmitted more effectively to the section of optical fibre 1 located within the blockage than to the adjacent sections of optical fibre 1. ODTR can be used to detect this difference.

In particular the DAS unit 7 transmits an optical signal into optical fibre 1. The optical signal travels along fibre 1 and is back scattered by particles along the length of fibre 1. The DAS unit measures the intensity of a return signal that has been backscattered specifically from particles in optical fibre 1 at first target location 9. It does this by detecting the return signal within a time window corresponding to the time of return of signals back scattered from first target location 9. The measured intensity of the return signal is compared to a threshold. If the measured intensity of the return signal is greater than the threshold then a potential blockage has been identified.

If the measured intensity of the return signal is less than the threshold then no potential blockage has been identified and a second optical signal is transmitted into fibre 1. The DAS unit 7 measures the intensity of the return signal that has been back scattered from particles in the optical fibre at a second target location 10, the second target location being an increment d further along the fibre from the first target location. In the present example d=1m. Again, the measured intensity of the return signal is then compared to the threshold. If the measured intensity of this return signal is greater than the threshold then then a potential blockage has been identified. If it is less than the threshold then no potential blockage has been identified and the process repeats at a third target location 11 an increment d further along the fibre than the second target location. In a similar way the process repeats for further target locations until the end of the fibre is reached.

If at any of the target locations the measured intensity of the return signal is greater than the threshold, the process moves to a resolution stage.

### Resolution Stage

In the example of Fig 1, the measured intensity of the return signal is greater than the threshold at the third target location 11, as the third target location is within the blockage 5. In particular, DAS unit 7 transmits a resolution optical signal along optical fibre 1 and measures the backscattered return signal from two resolution locations along fibre 1. The two resolution locations are a resolution distance r from the third target location 11 in a direction (i) towards DAS unit 7; and (ii) away from DAS unit 7. The two resolution locations are not labelled in Fig 1 to improve clarity. In the present example r=1m.

The measured intensity at the third target location 11 is then compared to the measured intensity at the first and second resolution locations. If the measured intensity at the target location is greater than the measured intensity at the first and second resolution locations the process proceeds to a verification stage. If the measured intensity at the target location is not greater than the measured intensity at the first and second resolution locations the process restarts at the next target location, an increment further along the fibre 1 from the third target location.

### Verification Stage

A verification stage is required because the fact that the return signal from the target location has exceeded a threshold may be the result of the cable carrying the optical fibre being coupled with the wall of the duct, rather than from a blockage. Being coupled with the duct would also cause acoustic signals to be transmitted effectively to the optical fibre. The verification stage compares the return signal from the target location with a return signal from a fibre in a neighbouring cable. As it is unlikely that both cables would be coupled with the wall of the duct, if the intensity of the return signal from the neighbouring cable also exceeds the threshold, it is very likely that a blockage has been identified.

In the verification stage the DAS unit 7 transmits a verification signal into optical fibre 2. The DAS unit 7 measures the return signal corresponding to a signal that has been back scattered from a verification location 13 in optical fibre 2 that is in the vicinity of the target location on optical fibre 1. In the present example the verification location 13 is within an axial distance of 0.2 metres of the target location. If the measured intensity of the return verification signal is greater than the threshold then the presence of a blockage has been verified. A notification is then sent to a field operative indicating that a blockage has been located at the third target location 11 and remedial action is required to remove it, particularly if further cables are to be added to the duct.

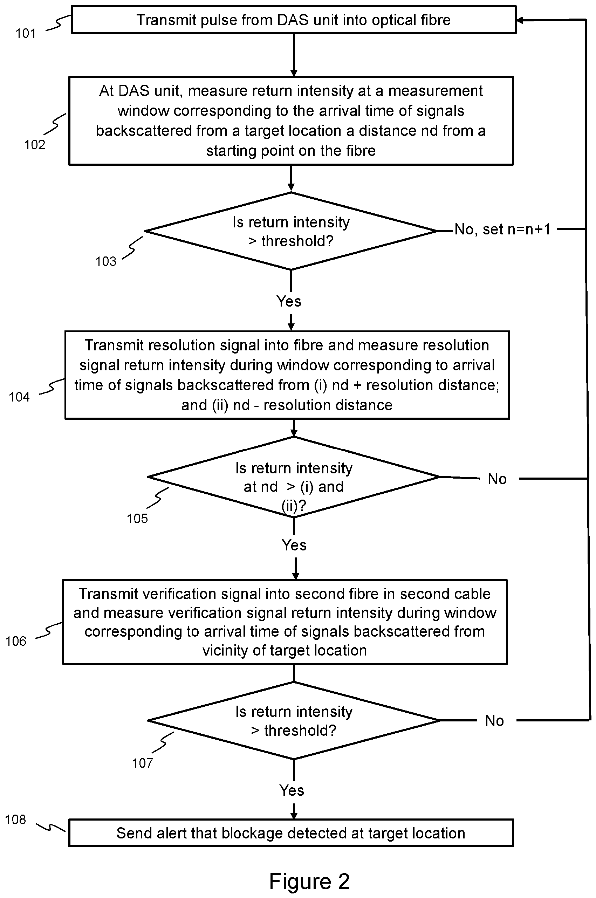

Fig 2 is a flow chart showing the main steps of the method according to the invention. In particular:
At step 101 a pulse is transmitted from DAS unit 7 into optical fibre 1.
At step 102, at DAS unit 7, measure the intensity of a return signal backscattered from an nth target location a distance nd from a starting point, where n (0... N) and d is an increment.
At step 103, determine if the intensity of the return signal > threshold. If the answer is no, return to step 101 with n=n+1. If the answer is yes, proceed to step 104.
At step 104, transmit a resolution signal is transmitted into fibre 1 and measure the intensity of the return signal at resolution locations (i) nd + r; and (ii) nd - r, where r is the resolution distance.
At step 105, determine if the return intensity at nd > at the resolution locations. If the answer is no, return to step 101. If the answer is yes, proceed to step 106.
At step 106, a verification signal is transmitted into a second fibre 1 and the return intensity at a verification location is measured.
At step 107, determine if the return intensity > the threshold. If the answer is no, return to step 101. If the answer is yes, proceed to step 108.
At step 108, send an alert that blockage detected at the target location.

## Claims

1. A method of Distributed Acoustic Sensing, the method comprising:
transmitting an optical sensing signal into an optical fibre located in a channel;
measuring an intensity of a return signal, the return signal comprising a component of the optical sensing signal that has been backscattered from a target location in the optical fibre;
performing a comparison of the measured intensity of the return signal to a threshold;
if the comparison indicates that the intensity of the return signal is greater than the threshold, determining that a blockage may be present in the channel in the vicinity of the target location.

2. A method as claimed in claim 1, wherein the method of Distributed Acoustic Sensing is a method of phase coherent Optical Time Delay Reflectometry.

3. A method as claimed in claim 1 or claim 2, wherein the step of measuring an intensity of a return signal comprises measuring the intensity of the return signal during a period corresponding to the arrival time of a signal backscattered from a location in the fibre.

4. A method as claimed in any preceding claim, wherein the channel is a cable duct.

5. A method as claimed in any preceding claim, wherein the steps of transmitting an optical sensing signal into an optical fibre located in a channel and measuring an intensity of a return signal are performed at a Distributed Acoustic Sensing unit.

6. A method as claimed in any preceding claim, wherein the method comprises iteratively performing the steps:
measuring an intensity of a return signal, the return signal comprising a component of the optical sensing signal that has been backscattered from a target location of the optical fibre,
performing a comparison of the measured intensity of the return signal to a threshold; and
if the comparison indicates that the intensity of the return signal is greater than the threshold, determining that a blockage may be present in the channel at the target location
at a series of further target locations in the fibre, the further target locations being spaced apart by an increment of 1m.

7. A method as claimed in any preceding claim, wherein the method further comprises transmitting a resolution signal into optical fibre and measuring an intensity of a return resolution signal during:
(i) a first time window corresponding to the arrival time of a signal backscattered from a location in the fibre located a resolution distance from the target location in the direction of a source of the resolution signal;
(ii) a second time window corresponding to the arrival time of a signal backscattered from a location in the fibre located a resolution distance from the target location in an opposite direction to the source of the resolution signal.

8. A method as claimed in claim 7, wherein the resolution distance is 1m.

9. A method as claimed in claim 7 or claim 8, wherein the method further comprises comparing the intensity of the signal to the measured intensity during the first time window and to the measured intensity during the second time window and if the intensity of the signal is greater than the measured intensity during the first time window and the measured intensity during the second time window, the method further comprises determining that a blockage has been located and recording the location of the blockage as the target location.

10. A method as claimed in any preceding claim, wherein the method further comprises transmitting a verification optical signal into a second optical fibre located in same duct as the optical fibre.

11. A method as claimed in claim 10, wherein the method further comprises performing a comparison of the measured intensity of the return verification signal to a threshold and if the comparison indicates that the intensity of the return verification signal is greater than the threshold, determining that the presence of the blockage has been verified.

12. A method as claimed in claim 11, wherein the method further comprises transmitting a notification indicating the presence of a blockage at the target location.

13. A computer program comprising instructions which, when the program is executed by a computer, cause the computer to carry out the steps of any of claims 1 to 12.

14. A computer-readable carrier medium comprising the computer program of claim 13.
